# EUROPÄISCHE PATENTANMELDUNG

(11) **EP 2 778 000 A1**
(43) Veröffentlichungstag der Anmeldung: **17.09.2014**
(21) Anmeldenummer: 13196044.5
(22) Anmeldetag: 06.12.2013
(51) Int. Cl.: B60T 13/66, B60T 13/74, B60T 17/22

(54) **Testvorrichtung für ein hydraulisches Bremssystem mit einem elektromechanischen Bremskraftverstärker und Verfahren zum Untersuchen und/oder Entlüften eines hydraulischen Bremssystems mit einem elektromechanischen Bremskraftverstärker**

(30) Priorität: 31.01.2013 DE 102013201571
(71) Anmelder: ROBERT BOSCH GMBH, 70442 Stuttgart (DE)
(72) Erfinder: Horvath, Alexander, 70825 Korntal-Muenchingen (DE); Herrera Lopez, Eduardo, 71065 Sindelfingen (DE)

(57) **Zusammenfassung**

Die Erfindung betrifft eine Testvorrichtung (10) für ein hydraulisches Bremssystem eines Fahrzeugs mit einem elektromechanischen Bremskraftverstärker (10), welche dazu ausgelegt ist, den elektromechanischen Bremskraftverstärker (12) so anzusteuern, dass ein Verstärkerkolben des elektromechanischen Bremskraftverstärkers (12) mittels eines Motors (20) des elektromechanischen Bremskraftverstärkers (12) um einen vorgegebenen Verfahrweg (S) verstellbar ist und/oder ein Messzeitintervall (tm) während einer Betätigung eines Bremsbetätigungselements (22) des hydraulischen Bremssystems mit einer eingehaltenen Betätigungsgeschwindigkeit (V) innerhalb eines Soll-Wertebereichs mittels mindestens einer Sensor- und/oder Auswerteeinrichtung (24) des elektromechanischen Bremskraftverstärkers (12) ermittelbar ist, und unter Berücksichtigung mindestens einer gemessenen Kennlinie (28a bis 28d) des elektromechanischen Bremskraftverstärkers (12) und/oder des hydraulischen Bremssystems einen Entlüftungszustand, eine Dichtheit, mindestens eine Druck-Weg-Charakteristik des hydraulischen Bremssystems, einen Funktionszustand des elektromechanischen Bremskraftverstärkers (12) und/oder eine Motormoment-Charakteristik des elektromechanischen Bremskraftverstärkers (12) festzulegen. Ebenso betrifft die Erfindung einen elektromechanischen Bremskraftverstärker (12) und ein Verfahren zum Untersuchen und/oder Entlüften eines hydraulischen Bremssystems mit einem elektromechanischen Bremskraftverstärker.

## Beschreibung

Die Erfindung betrifft eine Testvorrichtung für ein hydraulisches Bremssystem eines Fahrzeugs mit einem elektromechanischen Bremskraftverstärker. Ebenso betrifft die Erfindung einen elektromechanischen Bremskraftverstärker für ein hydraulisches Bremssystem eines Fahrzeugs. Des Weiteren betrifft die Erfindung ein Verfahren zum Untersuchen und/oder Entlüften eines hydraulischen Bremssystems eines Fahrzeugs mit einem elektromechanischen Bremskraftverstärker.

### Stand der Technik

Aus dem Stand der Technik ist ein externes Pedalprüfgerät des Modells/Typs M0122648.01 (Seriennummer wiBT HS00036) von Dürr Somac bekannt. Das externe Pedalprüfgerät kann derart in einem fahrersitzlosen Fahrzeuginnenraum montiert werden, dass das Bremspedal des jeweiligen Fahrzeugs mittels des externen Pedalprüfgeräts verstellbar ist und eine mögliche Rückantwort des hydraulischen Bremssystems des Fahrzeugs ermittelbar ist. Anhand der Rückantwort soll überprüfbar sein, ob das Bremspedal eine gewünschte Funktionsfähigkeit aufweist.

### Offenbarung der Erfindung

Die Erfindung schafft eine Testvorrichtung für ein hydraulisches Bremssystem eines Fahrzeugs mit einem elektromechanischem Bremskraftverstärker mit den Merkmalen des Anspruchs 1, einen elektromechanischen Bremskraftverstärker für ein hydraulisches Bremssystem eines Fahrzeugs mit den Merkmalen des Anspruchs 7 und ein Verfahren zum Untersuchen und/oder Entlüften eines hydraulischen Bremssystems eines Fahrzeugs mit einem elektromechanischen Bremskraftverstärker mit den Merkmalen des Anspruchs 8.

### Vorteile der Erfindung

Die vorliegende Erfindung ermöglicht eine einfach ausführbare Überprüfung eines elektromechanischen Bremskraftverstärkers und/oder eines hydraulischen Bremssystems. Zur Überprüfung des elektromechanischen Bremskraftverstärkers können eine Motormoment-Charakteristik (z.B. eine Strom-Weg-Kennlinie) und/oder ein Funktionszustand des elektromechanischen Bremskraftverstärkers verlässlich festgestellt werden. Außerdem können Tests/Messungen zum Ermitteln eines Entlüftungszustands, einer Dichtheit und/oder mindestens einer Druck-Weg-Charakteristik (Pedalcharakteristik, Druck-Weg-Kennlinie) des hydraulischen Bremssystems mittels der vorliegenden Erfindung verlässlich ausgeführt werden. Vorteilhafter Weise können die hier aufgezählten Untersuchungen/Überprüfungen alle an einem Bandende in einem Kundenfertigungswerk oder in einer Werkstatt (Service-Werkstatt) ausgeführt werden. Dies erleichtert eine Überprüfung des hydraulischen Bremssystems/des elektromechanischen Bremskraftverstärkers und reduziert die Kosten zum Ausführen einer derartigen Überprüfung.

Außerdem gewährleistet die erfindungsgemäße Testvorrichtung gegenüber einem externen Pedalprüfgerät den Vorteil, dass eine Montage der Vorrichtung an einem Fahrzeug zum Ausführen der Überprüfungen nicht notwendig ist. Stattdessen kann die Testvorrichtung während einer Herstellung des Bremssystems/des elektromechanischen Bremskraftverstärkers an diesem verbaut werden. Insbesondere kann die Testvorrichtung mittels eines einfach ausführbaren Programmierschritts in eine Elektronik des Fahrzeugs, insbesondere in eine Elektronik des elektromechanischen Bremskraftverstärkers, integriert werden. (Dies ist möglich, da die Testvorrichtung in der Regel keine mechanischen Komponenten benötigt.) Somit entfällt der Aufwand einer Montage der Testvorrichtung vor jeder auszuführenden Überprüfung. Die Überprüfung ist deshalb auch schneller ausführbar. Außerdem können Fehlmessungen aufgrund einer Fehlmontage ausgeschlossen werden. Die erfindungsgemäße Testvorrichtung ermöglicht somit ein genaueres und verlässlicheres Ausführen der Überprüfung gemäß einem vorgebbaren Überprüfungsprogramm.

Da die Testvorrichtung in Betrieb genommen werden kann, ohne dass sie zuvor anstelle eines Fahrersitzes im Fahrzeug zu montieren ist, entfällt auch der Aufwand eines Ausbauens des Fahrersitzes zum (nachträglichen) Überprüfen des elektromechanischen Bremskraftverstärkers/hydraulischen Bremssystems. Außerdem ist die Testvorrichtung kostengünstiger herstellbar als ein herkömmliches externes Pedalprüfgerät. Während ein (insbesondere für den betreffenden Fahrzeugtyp/Pedaltyp) geeignetes herkömmliches externes Pedalprüfgerät häufig in Service-Werkstätten nicht verfügbar ist, kann die erfindungsgemäße Testvorrichtung auf einfache Weise von einer Service-Werkstatt zum Ausführen der Überprüfung aktiviert werden. Durch das leichtere und verlässlichere Ausführen der Überprüfung mittels der vorliegenden Erfindung kann schneller auf Funktionsbeeinträchtigungen des elektromechanischen Bremskraftverstärkers und/oder des hydraulischen Bremssystems reagiert werden.

In einer vorteilhaften Ausführungsform ist die Elektronikeinrichtung zusätzlich dazu ausgelegt, während des Verstellens des verstellbaren Verstärkerkolbens um den vorgegebenen Verfahrweg gemessene Druck-Werte mindestens eines in mindestens einer hydraulischen Komponente des hydraulischen Bremssystems mehrmals ermittelten Drucks und/oder gemessene Motorstrom-Werte eines von dem elektromechanischen Bremskraftverstärker aufgenommenen mehrmals ermittelten Motorstroms als die mindestens eine Kennlinie zum Festlegen einer Druck-Weg-Charakteristik des hydraulischen Bremssystems im elektromotorischen Betrieb und/oder der MotormomentCharakteristik des elektromechanischen Bremskraftverstärkers auszuwerten. Die Testvorrichtung eignet sich somit auch zum Untersuchen von charakteristischen Größen des hydraulischen Bremssystems/des elektromechanischen Bremskraftverstärkers, welche mittels eines herkömmlichen externen Pedalprüfgeräts nicht erfassbar sind.

Als Alternative oder als Ergänzung dazu kann die Elektronikeinrichtung zusätzlich dazu ausgelegt sein, zumindest einen vor einer Leckage-Prüfzeit ermittelten ersten Druck-Wert des mindestens einen in der mindestens einen hydraulischen Komponente nach dem Verstellen des verstellbaren Verstärkerkolbens um den vorgegebenen Verfahrweg vorliegenden Drucks und einen nach der Leckage-Prüfzeit ermittelten zweiten Druck-Wert des mindestens einen Drucks als die mindestens eine Kennlinie zum Festlegen der Dichtheit des hydraulischen Bremssystems auszuwerten. Die Dichtheit des hydraulischen Bremssystems ist somit auf einfache Weise und verlässlich überprüfbar. Somit kann bei Vorliegen einer Undichtheit an dem hydraulischen Bremssystem schnell reagiert werden.

In einer weiteren vorteilhaften Ausführungsform ist die Elektronikeinrichtung zusätzlich dazu ausgelegt, während des Verstellens und/oder nach dem Verstellen des verstellbaren Verstärkerkolbens um den vorgegebenen Verfahrweg zu ermitteln, ob eine zwischenzeitliche Betätigung des Bremsbetätigungselements feststellbar ist, und die mindestens eine gemessene Kennlinie nur auszuwerten, sofern keine zwischenzeitliche Betätigung des Bremsbetätigungselements feststellbar ist. Damit ist verlässlich ausschließbar, dass aufgrund einer störenden Betätigung des Bremsbetätigungselements, wie beispielsweise eines Bremspedals, unerwünschte Fehlergebnisse bei der Überprüfung auftreten.

Vorzugsweise ist die Elektronikeinrichtung zusätzlich dazu ausgelegt, innerhalb des Messzeitintervalls gemessene Druck-Werte des mindestens einen in der mindestens einen hydraulischen Komponente mehrmals ermittelten Drucks als die mindestens eine Kennlinie zum Festlegen einer Druck-Weg-Charakteristik des hydraulischen Bremssystems in der Rückfallebene auszuwerten. Die Testvorrichtung erfüllt somit auch die Funktion des herkömmlichen externen Pedalprüfgeräts verlässlich.

In einer weiteren vorteilhaften Ausführungsform ist die die Elektronikeinrichtung zusätzlich dazu ausgelegt ist, den elektromechanischen Bremskraftverstärker mittels des mindestens einen Steuersignals so anzusteuern, dass der Verstärkerkolben mittels des Motors des elektromechanischen Bremskraftverstärkers um mehrere Entlüftungshübe verstellbar ist, wobei die Elektronikeinrichtung zusätzlich dazu ausgelegt ist, mindestens eine Leuchtanzeigeeinrichtung, Bildanzeigeeinrichtung und/oder Tonausgabeeinrichtung so zu aktivieren, dass eine Aufforderung an eine Person zum Öffnen einer Entlüftungsschraube an einem jeweils zu entlüftenden Rad ausgebbar ist. Die Testvorrichtung kann somit auch zur Unterstützung einer Entlüftung des hydraulischen Bremssystems, beispielsweise nach einem Tausch von Bremsenteilen, wie beispielsweise einem ESP-Regelsystem, einer Bremszange oder einem Hauptbremszylinder, eingesetzt werden.

Die oben ausgeführten Vorteile sind auch mittels eines elektromechanischen Bremskraftverstärkers für ein hydraulisches Bremssystem eines Fahrzeugs mit einer derartigen Testvorrichtung gewährleistet.

Des Weiteren sind die Vorteile realisierbar durch ein Ausführen des Verfahrens zum Untersuchen und/oder Entlüften eines hydraulischen Bremssystems eines Fahrzeugs mit einem elektromechanischen Bremskraftverstärker. Es wird darauf hingewiesen, dass das Verfahren gemäß den oben beschriebenen Ausführungsformen weiterbildbar ist.

### Kurze Beschreibung der Zeichnungen

Weitere Merkmale und Vorteile der vorliegenden Erfindung während nachfolgend anhand der Figuren erläutert. Es zeigen:
- Fig. 1: eine schematische Darstellung einer Ausführungsform der Testvorrichtung;
- Fig. 2a bis 2c: Koordinatensysteme zum Erläutern einer ersten Ausführungsform des Verfahrens zum Untersuchen eines hydraulischen Bremssystems eines Fahrzeugs mit einem elektromechanischen Bremskraftverstärker;
- Fig. 3a und 3b: Koordinatensysteme zum Erläutern einer zweiten Ausführung des Verfahrens zum Untersuchen eines hydraulischen Bremssystems eines Fahrzeugs mit einem elektromechanischen Bremskraftverstärker; und
- Fig. 4a und 4b: Koordinatensysteme zum Erläutern einer dritten Ausführungsform des Verfahrens zum Entlüften eines hydraulischen Bremssystems eines Fahrzeugs mit einem elektromechanischen Bremskraftverstärker.

### Ausführungsformen der Erfindung

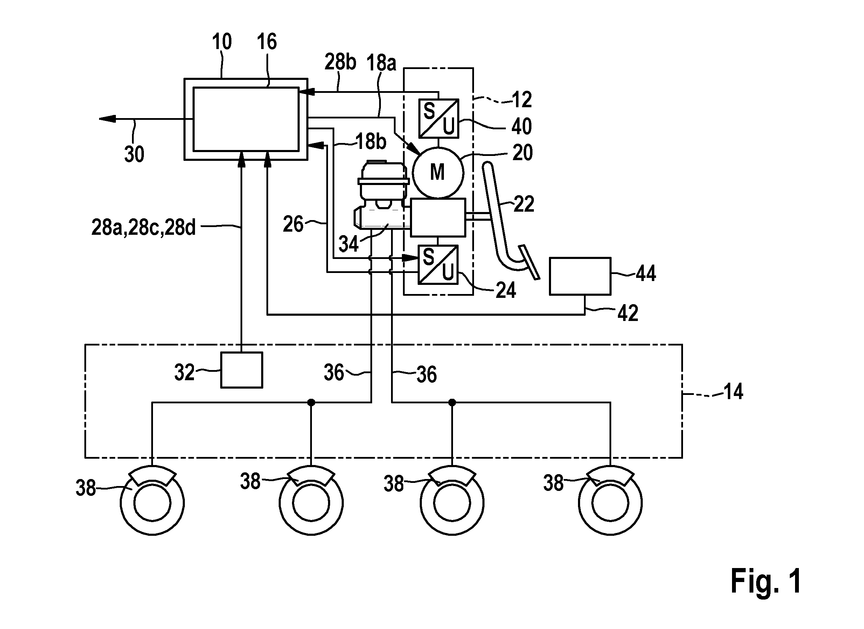

Fig. 1 zeigt eine schematische Darstellung einer Ausführungsform der Testvorrichtung.

Die in Fig. 1 schematisch dargestellte Testvorrichtung 10 ist zum Einsetzen in einem hydraulischen Bremssystem eines Fahrzeugs mit einem elektromechanischen Bremskraftverstärker 12 geeignet. Die Testvorrichtung 10 ist innerhalb des Fahrzeugs als ständige Komponente verbaubar. Beispielsweise kann die Testvorrichtung 10 in dem elektromechanischen Bremskraftverstärker 12 und/oder einem Hydraulikaggregat 14 des hydraulischen Bremssystems integriert sein. Die Ausbildbarkeit der Testvorrichtung 10 ist jedoch nicht auf eine Integration der Testvorrichtung 10 in mindestens eine Komponente des hydraulischen Bremssystems limitiert.

Die Testvorrichtung 10 weist eine Elektronikeinrichtung 16 auf. Die Elektronikeinrichtung 16 ist dazu ausgelegt, den elektromechanischen Bremskraftverstärker 12 mittel mindestens eines (extern oder intern ausgegebenen) Steuersignals 18a und 18b anzusteuern. Beispielsweise kann der elektromechanische Bremskraftverstärker 12 mittels eines ersten Steuersignals 18a der Elektronikeinrichtung 16 so ansteuerbar sein, dass ein (nicht dargestellter) Verstärkerkolben des elektromechanischen Bremskraftverstärkers 12 mittels eines Motors 20 des elektromechanischen Bremskraftverstärkers 12 um einen vorgegebenen Verfahrweg verstellbar ist.

Als Alternative oder als Ergänzung dazu kann jedoch auch der elektromechanische Bremskraftverstärker 12 mittels eines zweiten Steuersignals 18b so ansteuerbar sein, dass ein Messzeitintervall während einer Betätigung eines Bremsbetätigungselements 22 des hydraulischen Bremssystems mit einer eingehaltenen Betätigungsgeschwindigkeit innerhalb eines Soll-Wertebereichs mittels mindestens einer Sensor- und/oder Auswerteeinrichtung 24 des elektromechanischen Bremskraftverstärkers 12 ermittelbar ist. Ein dem Beginn, die Länge und/oder dem Ende des Messzeitintervalls entsprechendes Signal 26 kann an die Elektronikeinrichtung 16 von der mindestens einen Sensor- und/oder Auswerteeinrichtung 24 ausgegeben werden. Ebenso können von der mindestens einen Sensor- und/oder Auswerteeinrichtung 24 ermittelte Mess-Größen bezüglich der Betätigungsgeschwindigkeit an die Elektronikeinrichtung 16 ausgegeben werden.

Die Testvorrichtung 10 ist somit ausgelegt zum Zusammenwirken mit Bremskraftverstärker-Komponenten 20 und 24, welche in einem elektromechanischen Bremskraftverstärker 12 in der Regel bereits vorhanden sind. Somit entfällt die Notwendigkeit, einen mit der Testvorrichtung 10 zusammenwirkenden elektromechanischen Bremskraftverstärkerstärker 12 mit zusätzlichen Komponenten auszustatten oder weiter zu entwickeln. Stattdessen kann die Testvorrichtung 10 mit einer Vielzahl von verschiedenen Typen von herkömmlichen elektromechanischen Bremskraftverstärkern 12 eingesetzt werden.

Die Elektronikeinrichtung 16 ist zusätzlich dazu ausgelegt, unter Berücksichtigung mindestens einer während eines Verstellens und/oder nach einem Verstellen des verstellbaren Verstärkerkolbens um den vorgegebenen Verfahrweg und/oder innerhalb des Messzeitintervalls gemessenen Kennlinie 28a bis 28d des elektromechanischen Bremskraftverstärkers 12 und/oder des hydraulischen Bremssystems einen Entlüftungszustand des hydraulischen Bremssystems, eine Dichtheit des hydraulischen Bremssystems, mindestens eine Druck-Weg-Charakteristik des hydraulischen Bremssystems, einen Funktionszustand des elektromechanischen Bremskraftverstärkers 12 und/oder eine Motormoment-Charakteristik des elektromechanischen Bremskraftverstärkers 12 festzulegen. Eine den festgelegten Größen entsprechende Information 30 ist anschließend mittels der Elektronikeinrichtung 16 ausgebbar.

Die Information 30 kann beispielsweise an eine Leuchtanzeige, eine Bildanzeige und/oder eine Tonausgabeeinrichtung des mit der Testvorrichtung 10 ausgestatteten Fahrzeugs ausgegeben werden. Auf diese Weise kann der Fahrer oder ein Kontrolleur (insbesondere im Falle eines Abweichens einer festgelegten Größe von einer Sollgröße) aufgefordert werden, eine Werkstatt aufzusuchen und/oder eine Reparatur auszuführen. Außerdem kann die Information 30 auch an eine fahrzeugexterne Informationsauslesevorrichtung weitergeleitet/gesendet werden. Mittels einer Nutzung der Information 30 sind somit ein schnelleres Erkennen eines möglicherweise vorliegenden Fehlers und dessen kostengünstigere Behebung möglich.

Die Testvorrichtung 10 bietet somit eine verlässliche Überprüfung des elektromechanischen Bremskraftverstärkers 12 und/oder des hydraulischen Bremssystems. Die Überprüfung kann wahlweise vor einer Auslieferung aus dem OEM/Fahrzeugfertigungswerk oder für eine Reparatur/Kontrolluntersuchung in einer Service-Werkstatt ausgeführt werden. Der Vorteil der mittels der Testvorrichtung 10 ausführbaren Überprüfung/Untersuchung liegt darin, dass unabhängig von dem Ausführungsort der Überprüfung/Untersuchung in einem kombinierten Prüfverfahren/Prüfschritt die Funktion des elektromechanischen Bremskraftverstärkers 12, die Dichtheit des hydraulischen Bremssystems, der Entlüftungszustand des hydraulischen Bremssystems und/oder mindestens eine Druck-Weg- Charakteristik des hydraulischen Bremssystems (Bremspedalcharakteristik) messbar, autonom prüfbar und/oder beurteilbar sind. In einer Zusammenfassung der genannten Prüfungen/kombinierten Prüfung verringern sich das Handling des Prüfaufwands und die Prüfdauer. Außerdem erhöht sich eine Prozesssicherheit während des Ausführens der Untersuchungen/Prüfungen, insbesondere bei einer Bandendprüfung des OEM. Des Weiteren kann beim OEM auf eine externe Prüfung des Bremsbetätigungselements 22, wie beispielsweise eines Bremspedals, oder auf eine zweite Person zum Durchführen einer Bremsentlüftung verzichten werden. Somit sind bei einem Einsatz der Testvorrichtung 10 teure Messmittel oder Arbeitskosten einsparbar.

Ein weiterer Vorteil der Testvorrichtung 10 besteht darin, dass die Untersuchungen/Prüfungen von Werkstätten im Servicebereich mittels eines einfachen Werkzeugs ausführbar sind. Wie unten genauer ausgeführt wird, kann die Testvorrichtung 10 auch zur Unterstützung der Bremsenentlüftung so genutzt werden, dass die Bremsenentlüftung von einer einzigen Person verlässlich ausführbar ist.

Bei der in Fig. 1 dargestellten Ausführungsform ist eine erste Kennlinie 28a mittels eines Drucksensors 32 an die Elektronikeinrichtung 16 bereitstellbar. Die erste Kennlinie 28a umfasst während des Verstellens des verstellbaren Verstärkerkolbens um den Verfahrweg gemessene Druck-Werte mindestens eines in mindestens einer hydraulischen Komponente 34 bis 38 des hydraulischen Bremssystems mehrmals ermittelten Drucks. Beispielsweise kann dazu der Druck in einem Hauptbremszylinder 34, mindestens einem Bremskreis 36 und/oder mindestens einem Radbremszylinder 38 des hydraulischen Bremssystems mehrmals gemessen werden. Der Druck kann beispielsweise ein Hauptbremszylinder-Innendruck, ein Vordruck, ein Kreisdruck und/oder ein Raddruck sein. Die Elektronikeinrichtung 16 ist dazu ausgelegt, unter Berücksichtigung zumindest der ersten Kennlinie 28a eine Druck-Weg-Charakteristik (Druck-Weg-Kennlinie) des hydraulischen Bremssystems im elektromotorischen Betrieb festzulegen.

Außerdem ist bei der dargestellten Ausführungsform eine zweite Kennlinie 28b von einem Sensor 40 des elektromechanischen Bremskraftverstärkers 12 an die Elektronikeinrichtung 16 ausgebbar. Die zweite Kennlinie 28b umfasst gemessene Motorstrom-Werte eines von dem Motor 20 des elektromechanischen Bremskraftverstärkers 12 aufgenommenen (mehrmals ermittelten) Motorstroms. Mittels der zweiten Kennlinie 28b kann die Elektronikeinrichtung 16 die Motormoment-Charakteristik des elektromechanischen Bremskraftverstärkers 12 festlegen.

Zusätzlich ist die Elektronikeinrichtung 16 dazu ausgelegt, zumindest einen vor einer Leckage-Prüfzeit ermittelten ersten Druck-Wert des mindestens einen in der mindestens einen hydraulischen Komponente 34 bis 38 nach dem Verstellen des verstellbaren Verstärkerkolbens um den vorgegebenen Verfahrweg vorliegenden Drucks und einen nach der Leckage-Prüfzeit ermittelten zweiten Druck-Wert des mindestens einen Drucks als eine dritte Kennlinie 28c zum Festlegen der Dichtheit des hydraulischen Bremssystems auszuwerten.

In einer vorteilhaften Weiterbildung ist die Elektronikeinrichtung 16 auch dazu ausgelegt, während des Verstellens und/oder nach dem Verstellen des verstellbaren Verstärkerkolbens um den vorgegebenen Verfahrweg, wie beispielsweise während der Leckage-Prüfzeit, zu ermitteln, ob eine zwischenzeitliche Betätigung des Bremsbetätigungselements 22 feststellbar ist. Beispielsweise kann dazu ein Signal 42 eines Bremslichtschalters 44 an die Elektronikeinrichtung 16 bereitstellbar sein. Ebenso kann anstelle des Bremslichtschalters 44 bei Fahrzeugen mit einem elektromechanischen Bremskraftverstärker auch der Sensor 24 zur Auswertung/Erkennung einer Betätigung des Bremsbetätigungselements 22 verwendet werden.

Bevorzugter Weise wird die mindestens eine gemessene Kennlinie 28a bis 28c nur ausgewertet, sofern keine zwischenzeitliche Betätigung des Bremsbetätigungselements 22 feststellbar ist. Auf diese Weise sind Fehlergebnisse aufgrund einer unerwünschten Betätigung des Bremsbetätigungselements 22 verlässlich verhinderbar. Bei der Ausführungsform der Fig. 1 ist das Bremsbetätigungselement 22 als Bremspedal 22 ausgebildet. Die Einsetzbarkeit der Testvorrichtung 10 ist jedoch nicht auf ein Bremssystem mit einem Bremspedal 22 limitiert.

Vorteilhafter Weise kann die Elektronikeinrichtung 16 auch dazu ausgelegt sein, innerhalb des Messzeitintervalls gemessene Druck-Werte des mindestens einen in der mindestens einen hydraulischen Komponente 34 bis 38 mehrmals ermittelten Drucks als eine vierte Kennlinie 28d zum Festlegen einer Druck-Weg-Charakteristik in der Rückfallebene des hydraulischen Bremssystems auszuwerten. Vorteilhafter Weise kann zum Ermitteln der Kennlinien 28a, 28c und 28d der gleiche Drucksensor 32 genutzt werden. Insbesondere kann auf einen Drucksensor 32 zurückgegriffen werden, welcher bereits an dem hydraulischen Bremssystem verbaut ist. Durch diese Multifunktionalität des Drucksensors 32 können ein Bauraumbedarf und die Kosten des mit der Testvorrichtung 10 zusammenwirkenden hydraulischen Bremssystems reduziert werden. Auch der Sensor 40 kann ein herkömmlicher Weise bereits in einem elektromechanischem Bremskraftverstärker häufig verbauter Sensor sein.

Die oben genannten Sensoren 32 und 40 können auch Untereinheiten der Testvorrichtung 10 sein. Vorteilhafter Weise kann die Testvorrichtung 10 jedoch auch Kennlinien 28a bis 28d von getrennt angeordneten Sensoren 32 und 40 auswerten.

In einer Weiterbildung der Testvorrichtung 10 ist die Elektronikeinrichtung 16 auch zur Unterstützung einer Entlüftung des hydraulischen Bremssystems ausgelegt. Dazu ist der elektromechanische Bremskraftverstärker 12 mittels des mindestens einen Steuersignals 18a und 18b so ansteuerbar, dass der Verstärkerkolben mittels des Motors 20 des elektromechanischen Bremskraftverstärkers 12 um mehrere Entlüftungshübe verstellbar ist. Zusätzlich ist die Elektronikeinrichtung 16 dazu ausgelegt, mindestens eine Leuchtanzeigeeinrichtung, Bildanzeigeeinrichtung und/oder Tonausgabeeinrichtung des mit der Testvorrichtung 10 ausgestatten Fahrzeugs so zu aktivieren, dass eine Aufforderung an eine Person zum Öffnen einer Entlüftungsschraube an dem jeweils zu entlüftenden Rad (als Leuchtanzeige, Bildanzeige und/oder Tonausgabe) ausgebbar ist. Des Weiteren kann mittels der Elektronikeinrichtung 16 eine Hydraulik des hydraulischen Bremssystems zum Ausführen einer Entlüftungsroutine ansteuerbar sein.

Auch ein elektromechanischer Bremskraftverstärker 12 für ein hydraulisches Bremssystem eines Fahrzeugs mit der integrierten Testvorrichtung 10 gewährleistet alle oben ausgeführten Vorteile.

Die Testvorrichtung 10 kann insbesondere dazu ausgelegt sein, die im Weiteren beschriebenen Verfahrensschritte auszuführen. Bezüglich der mittels der Testvorrichtung 10 außerdem noch ausführbaren Verfahrensschritte wird deshalb auf die folgenden Beschreibungen verwiesen.

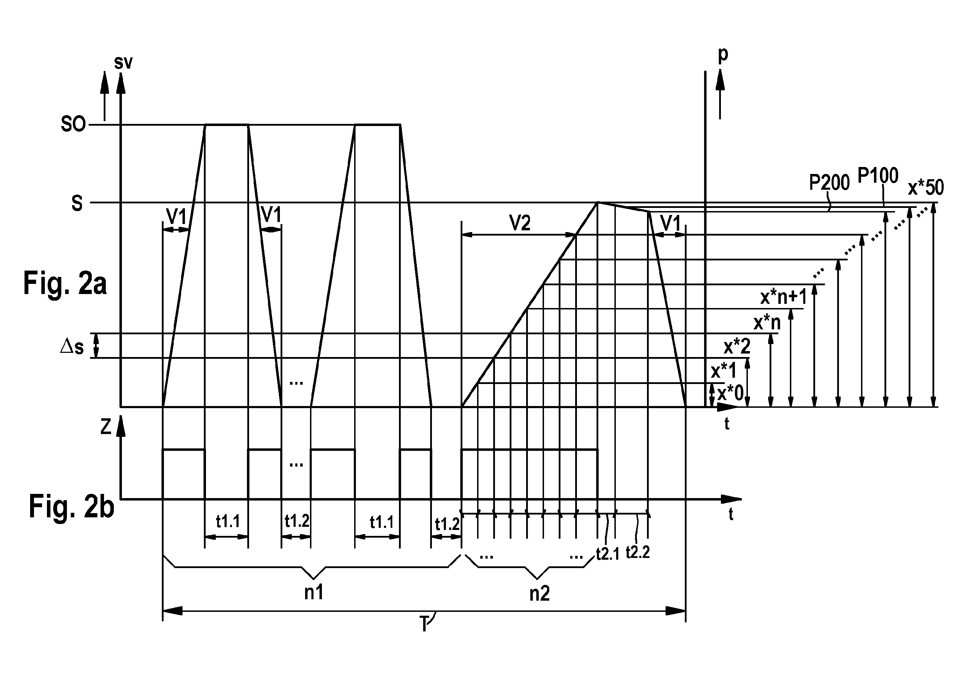

Fig. 2a bis 2c zeigen Koordinatensysteme zum Erläutern einer ersten Ausführungsform des Verfahrens zum Untersuchen eines hydraulischen Bremssystems eines Fahrzeugs mit einem elektromechanischen Bremskraftverstärker.

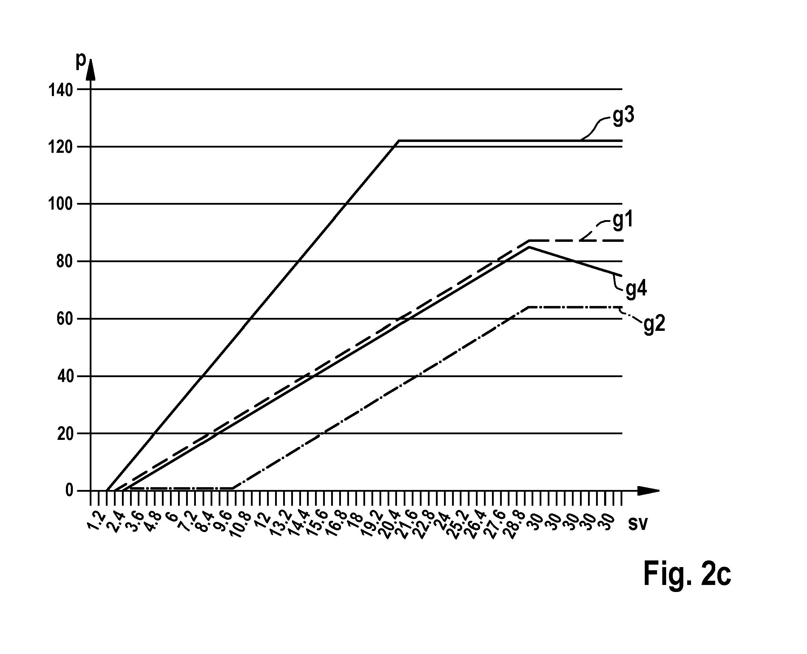

Die Abszissen der Koordinatensysteme der Fig. 2a und 2b sind die Zeitachse t (in Sekunden). Eine Ordinate des Koordinatensystems der Fig. 2a und eine Abszisse des Koordinatensystems 2c ist ein Verfahrweg sv eines Verstärkerkolbens des elektromechanischen Bremskraftverstärkers (in Millimeter). Eine andere Ordinate des Koordinatensystems der Fig. 2a und eine Ordinate des Koordinatensystems der Fig. 2c ist ein in mindestens einer hydraulischen Komponente des hydraulischen Bremssystems vorliegender Druck p (in bar). (Wahlweise kann die weitere Ordinate des Koordinatensystems der Fig. 2a auch eine Stromstärke eines Motorstroms (in Ampere) anzeigen.) Mittels der Ordinate des Koordinatensystems der Fig. 2b ist ein Betriebszustand Z eines Motors des elektromechanischen Bremskraftverstärkers wiedergegeben.

Das mittels der Fig. 2a bis 2c wiedergegebene Verfahren wird durchgeführt zum Ermitteln einer Dichtheit des hydraulischen Bremssystems, mindestens einer Druck-Weg-Charakteristik des hydraulischen Bremssystems, eines Funktionszustands des elektromechanischen Bremskraftverstärkers und/oder einer Motormoment-Charakteristik des elektromechanischen Bremskraftverstärkers. Auch ein Entlüftungszustand des hydraulischen Bremssystems ist mittels des Verfahrens (indirekt) erfassbar.

In einem Verfahrensschritt wird der Verstärkerkolben des elektromechanischen Bremskraftverstärkers mittels des Motors um einen vorgegebenen Verfahrweg S verstellt. In einem gleichzeitig ausgeführten Verfahrensschritt wird mindestens eine Kennlinie des elektromechanischen Bremskraftverstärkers und/oder des hydraulischen Bremssystems während des Verstellens und/oder nach dem Verstellen des verstellbaren Verstärkerkolbens um den vorgegebenen Verfahrweg S gemessen. In einem nachfolgenden Verfahrensschritt erfolgt ein Auswerten der mindestens einen gemessenen Kennlinie des elektromechanischen Bremskraftverstärkers und/oder des hydraulischen Bremssystems zum Festlegen des Entlüftungszustands des hydraulischen Bremssystems, der Dichtheit des hydraulischen Bremssystems, der mindestens einen Druck-Weg-Charakteristik des hydraulischen Bremssystems, des Funktionszustands des elektromechanischen Bremskraftverstärkers und/oder der Motormomentcharakteristik des elektromechanischen Bremskraftverstärkers.

Optionaler Weise können vor dem Ausführen dieser Verfahrensschritte noch eine Anzahl n1 von Testhüben mittels des Motors des elektromechanischen Bremskraftverstärkers ausgeführt werden. Vorzugsweise werden mindesten drei Testhübe ausgeführt, um ein Lüftspiel zwischen den Bremsbelägen und den Bremsscheiben zu minimieren. Beispielsweise kann ein Testhub folgenden Ablauf aufweisen: Zuerst wird mittels des Motors der Verstärkerkolben mit einer vorgegebenen Geschwindigkeit V1 auf den vorgegebenen Stangenweg S0 gefahren. Danach kann der Motor ausgeschaltet und die erreichte Position des Verstärkerkolbens für eine vorgegebene Zeit t1.1 gehalten werden. Als nächstes kann der Motor erneut eingeschaltet und der Verstärkerkolben mit der Geschwindigkeit V1 auf seine Ausgangsposition zurück gefahren werden. Nach einer weiteren Zeit t1.2 kann ein weiterer Testhub ausgeführt werden, oder mit dem Ausführen der oben beschriebenen Verfahrensschritte begonnen werden.

Nach den Testhüben kann der Messhub ausgeführt werden. Zum Ausführen des Messhubs wird der Verstärkerkolben um den vorgegebenen Verfahrweg S mit einer Geschwindigkeit V2 mittels des Motors des elektromechanischen Bremskraftverstärkers verstellt. Während des Verstellens des verstellbaren Verstärkerkolbens um den vorgegebenen Verfahrweg S werden Druck-Werte x*0 bis x*50 (mindestens eines in mindestens einer hydraulischen Komponente des hydraulischen Bremssystems vorliegenden Drucks p) gemessen. Ein Differenzweg Δs des verstellten Verstärkerkolbens zwischen zwei nachfolgenden Messungen kann sich aus dem Quotient des Verfahrwegs S und der Anzahl von Messpunkten n2 ergeben. Die Druck-Werte x*0 bis x*50 können von dem mindestens einen eingesetzten Drucksensor mittels eines CAN-Busses an eine Auswerteelektronik übertragen werden. Anschließend können die gemessenen Druck-Werte x*0 bis x*50 ausgewertet werden.

Bei der in Fig. 2a bis 2c wiedergegebenen Ausführungsform wird auch eine Dichtheit des hydraulischen Bremssystems untersucht. Dazu werden zumindest ein erster Druck-Wert P100 (des mindestens einen in der mindestens einen hydraulischen Komponente nach dem Verstellen des verstellbaren Verstärkerkolbens um den vorgegebenen Verfahrweg S vorliegenden Drucks p) vor einer Leckage-Prüfzeit t2.2 und ein zweiter Druck-Wert P200 (des mindestens einen Drucks p) nach der Leckage-Prüfzeit t2.2 gemessen. Optimaler Weise kann zwischen den Verstellen des verstellbaren Verstärkerkolbens um den vorgegebenen Verfahrweg S und dem Messen des ersten Druck-Werts P100 noch eine Zeit t2.1 abgewartet werden. Nach der Leckage-Prüfzeit t2.2 kann der Verstärkerkolben mit der Geschwindigkeit V1 in seine Ausgangsstellung zurückgefahren werden. Wie anhand Fig. 2b erkennbar ist, sind die oben ausgeführten Verfahrensschritte innerhalb einer vergleichsweise kurzen Gesamtzeit T ausführbar.

Fig. 2c gibt eine mögliche Auswertung der gemessenen Druck-Werte x*0 bis x*50, P100 und P200 wieder. Der Graph g1 zeigt Druckwerte, welche einer vorteilhaften Druck-Weg-Charakteristik eines ersten hydraulischen Bremssystems im elektromotorischen Betrieb und einer vorteilhaften Dichtheit des ersten hydraulischen Bremssystems entsprechen. Der Graph g2 weist darauf hin, dass Luft in einem zweiten hydraulischen Bremssystem vorliegt. Demgegenüber kann aus dem Graphen g3 auf eine falsche Volumenaufnahme eines dritten hydraulischen Bremssystems geschlossen werden. Außerdem zeigt der Graph g4 an, dass ein viertes hydraulisches Bremssystem zwar eine vorteilhafte Druck-Weg-Charakteristik im elektromotorischen Betrieb hat, jedoch aufgrund des vergleichsweise schnellen Abfallens der Druckwerte während der Zeit t2.2 eine Undichtheit in dem vierten hydraulischen Bremssystem vorliegt.

Wie anhand der Fig. 2c erkennbar ist, lassen sich die gemessenen Kennlinien somit mittels eines einfach ausführbaren Vergleichs mit Referenz-Werten und/oder Referenz-Kennlinien auswerten. Zum Auswerten der Kennlinien kann somit eine kostengünstige und wenig Bauraum erfordernde Elektronik eingesetzt werden.

In einer alternativen Ausführungsform oder als Ergänzung können während des Verstellens des verstellbaren Verstellkolbens um den vorgegebenen Verfahrweg S auch Motorstrom-Werte eines von dem elektromechanischen Bremskraftverstärker aufgenommenen Motorstroms als die mindestens eine Kennlinie gemessen werden. Somit kann während der vergleichsweise kurzen Gesamtzeit T auch eine Überprüfung des elektromechanischen Bremskraftverstärkers mitausgeführt werden.

Vorzugsweise wird während des Verstellens des verstellbaren Verstärkerkolbens um den vorgegebenen Verfahrweg S und/oder nach dem Verstellen, bzw. während der Leckage-Prüfzeit t2.2, überprüft, ob eine zwischenzeitliche Betätigung des Bremsbetätigungselements erfolgt. Dazu kann eine Abfrage des Bremslichtschalters innerhalb der Routine überwacht werden. Bevorzugter Weise wird die mindestens eine gemessene Kennlinie nur ausgewertet, sofern keine zwischenzeitliche Betätigung des Bremsbetätigungselements festgestellt wird. Beispielsweise kann, sofern eine Betätigung des Bremsbetätigungselements erkannt wird, die bereits begonnene/ausgeführte Überprüfung als fehlgeschlagen gewertet werden. Eine unerwünschte Betätigung des Bremsbetätigungselements während des Ausführens der Messungen kann somit zu keinerlei Fehlergebnissen beitragen.

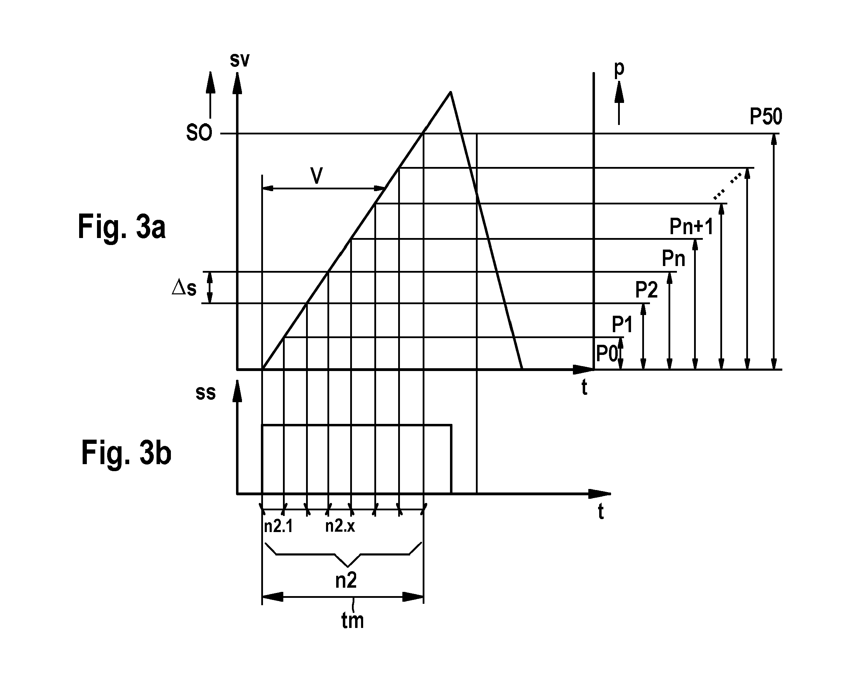

Fig. 3a und 3b zeigen Koordinatensysteme zum Erläutern einer zweiten Ausführung des Verfahrens zum Untersuchen eines hydraulischen Bremssystems eines Fahrzeugs mit einem elektromechanischen Bremskraftverstärker.

Die Abszissen der Koordinatensysteme der Fig. 3a und 3b sind die Zeitachse t (in Sekunden). Eine erste Ordinate des Koordinatensystems der Fig. 3a ist ein Verfahrweg sv des Verstärkerkolbens des elektromechanischen Bremskraftverstärkers (in Millimeter). Eine zweite Ordinate des Koordinatensystems der Fig. 3a ist ein in mindestens einer hydraulischen Komponente des hydraulischen Bremssystems vorliegender Druck p (in bar). Mittels einer Ordinate des Koordinatensystems der Fig. 3b ist ein Stangenweg ss, um welchen das Bremsbetätigungselement (Bremspedal) verstellbar ist, angezeigt.

Vor dem Ausführen des Verfahrens kann eine Person aufgefordert werden, dass Bremsbetätigungselement des Bremssystem mehrmals zu betätigen. Dies kann vorteilhaft sein, um das Luftspiel zwischen den Bremsbelägen und den Bremsscheiben zu minimieren. Anschließend kann die Person ausgefordert werden, dass Bremsbetätigungselement, wie beispielsweise ein Bremspedal, langsam und mit einer möglichst gleichmäßigen Geschwindigkeit bis zum Erreichen des vorgegebenen Stangenwegs S0 zu betätigen. Die Betätigungsgeschwindigkeit V kann mittels des Bremskraftverstärkers überwacht werden. Dies ist ausführbar, indem ein Messzeitintervall tm während der Betätigung des Bremsbetätigungselements mit einer eingehaltenen Betätigungsgeschwindigkeit V innerhalb eines Soll-Wertebereichs mittels mindestens einer Sensor- und/oder Auswerteeinrichtung des elektromechanischen Bremskraftverstärkers ermittelt wird.

Innerhalb des Messzeitintervalls tm können n2 Druck-Werte P0 bis P50 (des mindestens einen in der mindestens einen hydraulischen Komponente vorliegenden Drucks p) als die mindestens eine Kennlinie gemessen werden. Die Druckmessung kann jeweils nach einem Erreichen eines rechnerisch ermittelbaren Differenzmesswegs Δs ausgeführt werden. Die gemessenen Druckwerte P0 bis P50 können gespeichert werden. Vorzugsweise erfolgt die Druckmessung solange, bis der gegebene Stangenweg S0 erreicht ist. Ab diesem Zeitpunkt können die Druck-Werte P0 bis P50 zur Auswertung zur Verfügung gestellt werden. Abschließend kann die Person aufgefordert werden, das Bremsbetätigungselement wieder zu lösen.

Anhand der Druckwerte P0 bis P50 kann anschließend eine Druck-Weg-Charakteristik des Bremssystems einer Rückfallebene festgelegt werden. Da die zum Festlegen einer derartigen Kennlinie auszuführenden Schritte, bzw. die Schritte zum Auswerten einer derartigen Kennlinie, im Allgemeinen bekannt sind, wird hier nicht weiter darauf eingegangen. Beispielsweise kann eine Referenz-Kennlinie zur Auswertung herangezogen werden.

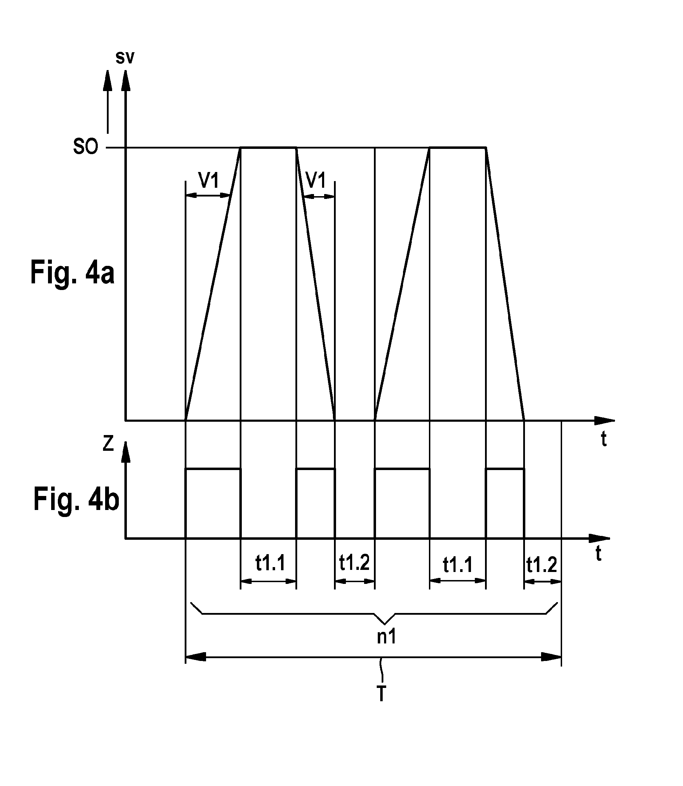

Fig. 4a und 4b zeigen Koordinatensysteme zum Erläutern einer dritten Ausführungsform des Verfahrens zum Entlüften eines hydraulischen Bremssystems eines Fahrzeugs mit einem elektromechanischen Bremskraftverstärker.

Die Abszissen der Koordinatensysteme der Fig. 4a und 4b sind erneut die Zeitachse t (in Sekunden). Eine Ordinate des Koordinatensystems der Fig. 4a ist ein Verfahrweg sv des Verstärkerkolbens des elektromechanischen Bremskraftverstärkers (in Millimeter). Mittels der Ordinate des Koordinatensystems der Fig. 4b ist ein Betriebszustand Z eines Motors des elektromechanischen Bremskraftverstärkers wiedergegeben.

Das in Fig. 4a und 4b schematisch wiedergegebene Verfahren kann als Ergänzung zu den zuvor ausgeführten Verfahrensschritten ausgeführt werden. Mittels des Verfahrens kann eine Bremsenentlüftung unterstützt werden. Dazu kann der Verstärkerkolben mittels des Motors des elektromechanischen Bremskraftverstärkers um eine vorgegebene Anzahl n1 von Entlüftungshüben verstellt werden. Dabei wird der Verstärkerkolben für jeden Entlüftungshub mit einer Geschwindigkeit V1 um den Stangenweg S0 ausgefahren und nach einer Zeit t1.1 wieder mit der Geschwindigkeit V1 in seine Ausgangsstellung zurück verstellt. Nach einer Zeit t1.2 kann ein erneuter Entlüftungshub durchgeführt werden.

Außerdem kann mindestens eine Leuchtanzeigeeinrichtung, Bildanzeigeeinrichtung und/oder Tonausgabeeinrichtung zum Ausgeben einer Aufforderung an eine Person aktiviert werden. Mittels der Leuchtanzeige, Bildanzeige und/oder Tonausgabe kann die Person zum Öffnen einer Entlüftungsschraube an einen jeweils zu entlüftenden Rad aufgefordert werden. Die Person kann somit die Entlüftung durchführen. Es wird darauf hingewiesen, dass die Entlüftung mittels des Verfahrens derart erleichtert ist, dass sie von einer einzigen Person verlässlich ausführbar ist.

Optimaler Weise kann parallel eine Entlüftungsroutine mittels einer Hydraulik des hydraulischen Bremssystems (z.B. des ESP-Regelsystem) für das entsprechende Rad ausgeführt werden. Nach einem Beenden der Entlüftung kann die Entlüftungsroutine gestoppt werden.

Die zum Ausführen der oben beschriebenen Verfahren verwendeten Parameter können zu Beginn des mindestens einen Verfahren vorgegeben werden oder auf einer Speichereinheit hinterlegt sein. Beispielsweise können mehrere Sätze der Parameter für verschiedene Fahrzeugtypen auf der Speichereinheit abgespeichert sein. Somit können die Verfahren auf einfache Weise in Hinblick auf verschiedene Typen von Bremssystemen und/oder Fahrzeugen optimiert werden. Andernfalls kann auch eine Service-Werkstatt ermächtigt werden, die zum Ausführen des mindestens einen Verfahrens verwendeten Parameter innerhalb bestimmter Wertebereiche frei vorzugeben.

## Patentansprüche

1. Testvorrichtung (10) für ein hydraulisches Bremssystem eines Fahrzeugs mit einem elektromechanischen Bremskraftverstärker (10) **gekennzeichnet durch**:
eine Elektronikeinrichtung (16), welche dazu ausgelegt ist, den elektromechanischen Bremskraftverstärker (12) mittels mindestens eines Steuersignals (18a, 18b) so anzusteuern, dass ein Verstärkerkolben des elektromechanischen Bremskraftverstärkers (12) mittels eines Motors (20) des elektromechanischen Bremskraftverstärkers (12) um einen vorgegebenen Verfahrweg (S) verstellbar ist und/oder ein Messzeitintervall (tm) während einer Betätigung eines Bremsbetätigungselements (22) des hydraulischen Bremssystems mit einer eingehaltenen Betätigungsgeschwindigkeit (V) innerhalb eines Soll-Wertebereichs mittels mindestens einer Sensor- und/oder Auswerteeinrichtung (24) des elektromechanischen Bremskraftverstärkers (12) ermittelbar ist, wobei die Elektronikeinrichtung (16) zusätzlich dazu ausgelegt ist, unter Berücksichtigung mindestens einer während eines Verstellens und/oder nach dem Verstellen des verstellbaren Verstärkerkolbens um den vorgegebenen Verfahrweg (S) und/oder innerhalb des Messzeitintervalls (tm) gemessenen Kennlinie (28a bis 28d) des elektromechanischen Bremskraftverstärkers (12) und/oder des hydraulischen Bremssystems einen Entlüftungszustand des hydraulischen Bremssystems, eine Dichtheit des hydraulischen Bremssystems, mindestens eine Druck-Weg-Charakteristik des hydraulischen Bremssystems, einen Funktionszustand des elektromechanischen Bremskraftverstärkers (12) und/oder eine Motormoment-Charakteristik des elektromechanischen Bremskraftverstärkers (12) festzulegen und eine entsprechende Information (30) auszugeben.

2. Testvorrichtung (10) nach Anspruch 1, wobei die Elektronikeinrichtung (16) zusätzlich dazu ausgelegt ist, während des Verstellens des verstellbaren Verstärkerkolbens um den vorgegebenen Verfahrweg (S) gemessene DruckWerte (x*0 bis x*50) mindestens eines in mindestens einer hydraulischen Komponente (34 bis 38) des hydraulischen Bremssystems mehrmals ermittelten Drucks (p) und/oder gemessene Motorstrom-Werte eines von dem elektromechanischen Bremskraftverstärker (12) aufgenommenen mehrmals ermittelten Motorstroms als die mindestens eine Kennlinie (28a, 28b) zum Festlegen einer Druck-Weg-Charakteristik des hydraulischen Bremssystems im elektromotorischen Betrieb und/oder der Motormoment-Charakteristik des elektromechanischen Bremskraftverstärkers (12) auszuwerten.

3. Testvorrichtung (10) nach Anspruch 1 oder 2, wobei die Elektronikeinrichtung (16) zusätzlich dazu ausgelegt ist, zumindest einen vor einer Leckage-Prüfzeit (t2.2) ermittelten ersten Druck-Wert (P100) des mindestens einen in der mindestens einen hydraulischen Komponente (34 bis 38) nach dem Verstellen des verstellbaren Verstärkerkolbens um den vorgegebenen Verfahrweg (S) vorliegenden Drucks (p) und einen nach der Leckage-Prüfzeit (t2.2) ermittelten zweiten Druck-Wert (P200) des mindestens einen Drucks (p) als die mindestens eine Kennlinie (28c) zum Festlegen der Dichtheit des hydraulischen Bremssystems auszuwerten.

4. Testvorrichtung (10) nach Anspruch 2 oder 3, wobei die Elektronikeinrichtung (16) zusätzlich dazu ausgelegt ist, während des Verstellens und/oder nach dem Verstellen des verstellbaren Verstärkerkolbens um den vorgegebenen Verfahrweg (S) zu ermitteln, ob eine zwischenzeitliche Betätigung des Bremsbetätigungselements (22) feststellbar ist, und die mindestens eine gemessene Kennlinie (28a bis 28c) nur auszuwerten, sofern keine zwischenzeitliche Betätigung des Bremsbetätigungselements (22) feststellbar ist.

5. Testvorrichtung (10) nach einem der vorhergehenden Ansprüche, wobei die Elektronikeinrichtung (16) zusätzlich dazu ausgelegt ist, innerhalb des Messzeitintervalls (tm) gemessene Druck-Werte (P0 bis P50) des mindestens einen in der mindestens einen hydraulischen Komponente (34 bis 38) mehrmals ermittelten Drucks (p) als die mindestens eine Kennlinie (28d) zum Festlegen einer Druck-Weg-Charakteristik des hydraulischen Bremssystems in der Rückfallebene auszuwerten.

6. Testvorrichtung (10) nach einem der vorhergehenden Ansprüche, wobei die Elektronikeinrichtung (16) zusätzlich dazu ausgelegt ist, den elektromechanischen Bremskraftverstärker (12) mittels des mindestens einen Steuersignals (18a, 18b) so anzusteuern, dass der Verstärkerkolben mittels des Motors (20) des elektromechanischen Bremskraftverstärkers (12) um mehrere Entlüftungshübe verstellbar ist, und wobei die Elektronikeinrichtung (16) zusätzlich dazu ausgelegt ist, mindestens eine Leuchtanzeigeeinrichtung, Bildanzeigeeinrichtung und/oder Tonausgabeeinrichtung so zu aktivieren, dass eine Aufforderung an eine Person zum Öffnen einer Entlüftungsschraube an einem jeweils zu entlüftenden Rad ausgebbar ist.

7. Elektromechanischer Bremskraftverstärker (12) für ein hydraulisches Bremssystem eines Fahrzeugs mit einer Testvorrichtung (10) nach einem der vorhergehenden Ansprüche.

8. Verfahren zum Untersuchen und/oder Entlüften eines hydraulischen Bremssystems eines Fahrzeugs mit einem elektromechanischen Bremskraftverstärker (12) mit dem Schritt:
Ermitteln eines Entlüftungszustands des hydraulischen Bremssystems, einer Dichtheit des hydraulischen Bremssystems, mindestens einer Druck-Weg-Charakteristik des hydraulischen Bremssystems, eines Funktionszustands des elektromechanischen Bremskraftverstärkers (12) und/oder einer Motormoment-Charakteristik des elektromechanischen Bremskraftverstärkers (12);
**gekennzeichnet durch** die Schritte:
Verstellen eines Verstärkerkolbens des elektromechanischen Bremskraftverstärkers (12) mittels eines Motors (20) des elektromechanischen Bremskraftverstärkers (12) um einen vorgegebenen Verfahrweg und/oder Ermitteln eines Messzeitintervalls (tm) während einer Betätigung eines Bremsbetätigungselements (22) des hydraulischen Bremssystems mit einer eingehaltenen Betätigungsgeschwindigkeit (V) innerhalb eines Soll-Wertebereichs mittels mindestens einer Sensor- und/oder Auswerteeinrichtung (24) des elektromechanischen Bremskraftverstärkers (12);
Messen mindestens einer Kennlinie (28a bis 28d) des elektromechanischen Bremskraftverstärkers (12) und/oder des hydraulischen Bremssystems während des Verstellens und/oder nach dem Verstellen des verstellbaren Verstärkerkolbens um den vorgegebenen Verfahrweg (S) und/oder innerhalb des Messzeitintervalls (tm); und
Auswerten der mindestens einen gemessenen Kennlinie (28a bis 28d) des elektromechanischen Bremskraftverstärkers (12) und/oder des hydraulischen Bremssystems zum Festlegen des Entlüftungszustands des hydraulischen Bremssystems, der Dichtheit des hydraulischen Bremssystems, der mindestens einen Druck-Weg-Charakteristik des hydraulischen Bremssystems, des Funktionszustands des elektromechanischen Bremskraftverstärkers (12) und/oder der Motormoment-Charakteristik des elektromechanischen Bremskraftverstärkers (12).

9. Verfahren nach Anspruch 8, wobei während des Verstellens des verstellbaren Verstärkerkolbens um den vorgegebenen Verfahrweg Druck-Werte (x*0 bis x*50) mindestens eines in mindestens einer hydraulischen Komponente (34 bis 38) des hydraulischen Bremssystems vorliegenden Drucks (p) und/oder Motorstrom-Werte eines von dem elektromechanischen Bremskraftverstärker (12) aufgenommenen Motorstroms als die mindestens eine Kennlinie (28a, 28b) mehrmals gemessen werden.

10. Verfahren nach Anspruch 8 oder 9, wobei nach dem Verstellen des verstellbaren Verstärkerkolbens um den vorgegebenen Verfahrweg (S) zumindest ein erster Druck-Wert (P100) des mindestens einen in der mindestens einen hydraulischen Komponente (34 bis 38) vorliegenden Drucks (p) vor einer Leckage-Prüfzeit (t2.2) und ein zweiter Druck-Wert (P200) des mindestens Drucks (p) nach der Leckage-Prüfzeit (t2.2) als die mindestens eine Kennlinie (28c) gemessen werden.

11. Verfahren nach Anspruch 9 oder 10, wobei während des Verstellens und/oder nach dem Verstellen des verstellbaren Verstärkerkolbens um den vorgegebenen Verfahrweg (S) überprüft wird, ob eine zwischenzeitliche Betätigung des Bremsbetätigungselements (22) erfolgt, und die mindestens eine gemessene Kennlinie (28a, 28c) nur ausgewertet wird, sofern keine zwischenzeitliche Betätigung des Bremsbetätigungselements (22) festgestellt wird.

12. Verfahren nach einem der Ansprüche 8 bis 11, wobei innerhalb des Messzeitintervalls (tm) Druck-Werte (P0 bis P50) des mindestens einen in der mindestens einen hydraulischen Komponente (34 bis 38) vorliegenden Drucks (p) als die mindestens eine Kennlinie (28d) mehrmals gemessen werden.

13. Verfahren nach einem der Ansprüche 8 bis 12, wobei der Verstärkerkolben mittels des Motors (20) des elektromechanischen Bremskraftverstärkers (12) um mehrere Entlüftungshübe verstellt wird, und mindestens eine Leuchtanzeigeeinrichtung, Bildanzeigeeinrichtung und/oder Tonausgabeeinrichtung zum Ausgeben einer Aufforderung an eine Person zum Öffnen einer Entlüftungsschraube an einem jeweils zu entlüftenden Rad aktiviert wird.
